Europäisches Patentamt

European Patent Office

Office européen des brevets

(11) Veröffentlichungsnummer: **0 447 682 A1**

## (12) EUROPÄISCHE PATENTANMELDUNG

(21) Anmeldenummer: 90125576.0

(22) Anmeldetag: 27.12.90

(51) Int. Cl.5: **B23B 31/10**

(30) Priorität: 23.03.90 HU 179990

(43) Veröffentlichungstag der Anmeldung:
25.09.91 Patentblatt 91/39

(84) Benannte Vertragsstaaten:
AT BE CH DE DK ES FR GB GR IT LI NL SE

(71) Anmelder: "KOSSUTH" MEZÖGAZDASAGI TERMELÖSZÖVETKEZET
Belsönyir 150
H-6000 Kecskemét(HU)

(72) Erfinder: Tajnafoi, J zsef, Dr.
Nagyváradi t 10
H-3508 Miskolc(HU)

(74) Vertreter: Kern, Wolfgang, Dipl.-Ing.
Patentanwälte Kern, Brehm & Partner
Albert-Rosshaupter-Strasse 73
W-8000 München 70(DE)

(54) **Aufspannfutter mit Ziehkeilen zum Aufspannen von zylindrischen Werkstücken.**

(57) Die Erfindung betrifft ein Aufspannfutter mit Ziehkeilen zum Aufspannen von zylindrischen Werkstücken mit Hilfe von in eine Zahnstange (6) eingreifenden äußeren Backen (7) und inneren Backen (3), wobei die inneren Backen (3) durch Keilbahnen an die Keilbahnen des zentralen Ziehkopfes (4) des Futters anschließen und der zentrale Ziehkopf eine, zur Ausübung einer axialen Bewegung geeignete, hydraulisch, pneumatisch oder elektromechanisch betätigte Vorrichtung aufweist.

Das Wesen der Erfindung besteht darin, daß die inneren Backen (3) in den im Futterhaus (1) axial geführten Körpern (2) radial geführt sind und die Körper durch Zungen (8) oder durch Bolzen (10) an dem Ring (9) angebracht sind, der an den äußeren Oberflächenteilen des Futterhauses (1) bzw. der mit Ihnen starr zusammengeschraubten Ringe (12) bzw. Aufspannscheiben geführt ist, daß ferner eine die relative Lage des äußeren Ringes (9) und des Futterhauses (1) verriegelnde Vorrichtung vorhanden ist und zwischen dem äußeren Ring und den mit dem Maschinenkörper verbundenen Konstruktionselementen eine an beliebiger Stelle des Futters fixierbare und die Verdrehung hindernde Vorrichtung (14) sowie eine zum diskreten Verdrehen oder zur axialen Verschiebung der Aufspanneinheit geeignete Vorrichtung vorgesehen sind.

Fig. 1

EP 0 447 682 A1

Die Erfindung betrifft ein Aufspannfutter mit Ziehkeilen zum Aufspannen von zylindrischen Werkstücken mit Hilfe von in eine Zahnstange eingreifenden äusseren Backen und inneren Backen, wobei die inneren Backen durch Keile an die Keile des zentralen Ziehkopfes des Futters anschliessen und der zentrale Ziehkopf eine hydraulisch, pneumatisch oder elektromechanisch betätigte, zur Ausübung einer axialen Bewegung geeignete Vorrichtung aufweist.

Die Futter mit grosser Spannkraft wurden zuerst für die Massenfabrikation zustandegebracht. Ihre mit Keilen oder Hebelarmen versehenen Mechanismen können die Backen nur in einem begrenzten Bereich bewegen. Deshalb müssen die Backen beim Umstellen des Werkstückdurchmessers oft verstellt bzw. ausgewechselt werden.

Ein anderes Kennzeichen dieser Futter ist, dass die mit dem Ziehkeil in Verbindung stehende Grundbacke oft - besonders bei kleineren Futtern - nur von aussen, durch Hineinschieben in radialer Richtung, montiert werden kann. Daraus folgt, dass die axiale Abmessung des Ziehkeiles auch bei diesen Lösungen nur begrenzt erhöht werden kann, da zum Hineinschieben der inneren Backe auf dem Futterkörper eine tiefe, von der axialen Abmessung der Backe abhängige Durchbrechung hergestellt werden muss. Die Begrenzung der axialen Abmessungen der Ziehkeile verringert deren Lastfähigkeit und Verschleissfestigkeit, da sich die Keilfläche des beim Zusammenpressen nach hinten gleitenden Ziehkopfes nur mit ihrem kleineren Teil an die Keilflächen der Backen anschliessen. Die Erhöhung der axialen Abmessungen der inneren Backen ergibt bei Backen mit grossen axialen Abmessungen auch eine grosse Inertieerhöhung, was bei grossen Drehzahlen die Erhöhung der Belastung der Keilflächen zur Folge hat.

Das Umstellen der Backen auf andere Durchmesserbereiche bedingt bei den meist verbreiteten Methoden manuelle Operationen und menschliche Eingriffe. Die manuellen Umstellungen sind langsam und unterbrechen die automatischen Vorgänge, deshalb sind sie bei elastischen Fertigungszellen und Fertigungssystemen ungünstig und in automatisierten Systemen unannehmbar.

Bei den meist verbraiteten Varianten werden die Aufsatzbacken mit Hilfe von Verzahnungen positioniert und mit Schrauben auf die Grundbacken befestigt. Zu diesem Zweck müssen in den Grundbacken T-förmige Nuten ausgebildet werden, die die Abmessungen der Backen in der Breite erhöhen, was dynamisch ungünstig ist.

Gemäss der DE-PS 128 88 72 der Firma Forkardt wird zwischen der durch den zentralen Ziehkeil bewegten inneren Backe und der Grundbacke eine Verbindung durch eine radiale, mit Gewinde versehene Spindel zustandegebracht, die auch mit Hand verstellbar ist.

An dem Aufspannfutter KTNC der Fa. Forkhardt sind in eine Zahnstange eingreifende innere und äussere Backen vorhanden, wobei die inneren Backen radial einschiebbar sind und eine zylindrische Form aufweisen. Beim Umstellen des Durchmessers werden sowohl die inneren als auch die äusseren Backen von dem Futter herausgezogen, in eine andere Stellung zusammengekuppelt, und zusammen in das Futter zurückgeschoben. Diese Operationen werden auch mit Hand durchgeführt.

Die Firma Röhm verwendet an seinem DURO-NCE-Futter auch eine Zahnstange. Die Entkupplung der Zahnstange wird so gelöst, dass innerhalb der inneren Backen eine nach hinten ziehbare, verzahnte Kupplung geführt wird. Dazu müssen die inneren Abmessungen der Backen erhöht werden, was dynamisch ungünstig ist. Die Verzahnung des Kupplungskopfes ist auch begrenzter, weiterhin können die Kupplungen nur bei einer bestimmten diskreten Position der Hauptspindel durchgeführt werden, d.h. diese Lösung kann nur bei Hauptspindeln, die eine Positionierung besitzen angewendet werden.

Bei der Massenfabrikation, wo menschliche Überwachung nur sehr begrenzt vorhanden ist, entstand immer mehr der Bedarf, Lösungen zu treffen, die den menschlichen Eingriff beseitigen und sich sogar in den Nachtschichten automatisch und elastisch der Einspannung von Werkstücken mit verschiedensten Durchmessern anpassen. Auf diesem Gebiet gelangten die Futter mit auswechselbaren Backen in die vorderste Linie, bei denen die automatische Umstellung der Backen durch die Auswechselung kompletter Backensätze mit Hilfe von Roboten verwirklicht wurde. Dafür mussten separate Backenmagazine in der Nähe der Maschine angelegt werden, von wo der Robot die für den neuen Durchmesserbereich geeigneten Backensätze zu dem Futter brachte und mit Hilfe eines speziellen Positionier- und Befestigungsmechanismus einen automatischen Backenwechsel durchführte. Der Vorteil dieser Lösung ist, dass alle drei Backen gleichzeitig, automatisch ausgewechselt werden können, doch diese Lösung weist auch mehrere Nachteile auf, z.B. neben der Maschine muss in dem Bewegungsbereich des Robotes, neben dem Werkstückmagazin und dem Werkzeugmagazin ein weiteres Magazin, das Backenmagazin angelegt werden. Zu vielen Durchmesserbereichen ist ein Backenmagazin von grosser Kapazität notwendig. Die Backenmagazine übten auch auf die Ausbildung der neben der Maschine anwendbaren Robote eine Wirkung aus, auch das spielt eine Rolle darin, dass in den letzten Zeiten die mit einer langen linearen Leitung versehenen Portalrobote in den Vordergrund gelangten.

Es werden oft Aufspannfutter angewendet, die an Robote montiert sind. Auch bei diesen ist die Umstellbarkeit auf verschiedene Durchmesser eine Bedingung, was oft nur mit Wechselsystemen gelöst werden kann.

Die Aufgabe der Erfindung ist die Beseitigung der Nachteile der bekannten Futter und das Zustandebringen eines Futters, bei welchem einerseits die Tragfähigkeit und Lebensdauer der zentralen Ziehkeile erhöht, andererseits die automatische Umstellung der Backen auch bei Hauptspindeln ohne Positionierung gelöst wird.

Diese Aufgabe wird erfindungsgemäss dadurch gelöst, dass die inneren Backen in den im Futterhaus axial geführten Körpern radial geführt sind und die Körper sich durch Zungen oder durch Bolzen dem Futterhaus bzw. dem an den Oberflächenteilen der mit ihnen starr zusammengeschraubten Ringen bzw. Aufspannscheiben geführten Ring anschliessen, weiterhin eine die relative Lage des ausseren Ringes und des Futterhauses verriegelnde Vorrichtung aufweist und zwischen dem ausseren Ring und den zum Maschinenkörper gebundenen Konstruktionselementen eine in beliebiger Stelle des Futters fixierbare und die Verdrehung hindernde Vorrichtung, weiterhin eine zum diskreten Verdrehen oder zur axialen Verschiebung des Aufspanneinheites geeignete Vorrichtung aufweist.

Die Erfindung wird anhand eines Ausführungsbeispieles näher erläutert.

In den Zeichnungen zeigen

Fig. 1 eine Längsschnitt des Futters,

Fig. 2 eine Vorderansicht des in Fig. 1 dargestellten Futters,

Fig. 3 einen Teil des ausgebreiteten Mantels des auf dem Futter geführten Ringes mit den sich anschliessenden Konstruktionselementen,

Fig. 4 den Betätigungsmechanismus der in Fig. 1 dargestellten Befestigungsbacken, im Schnitt,

Fig. 5 einen Schnitt nach Linie V-V in Fig. 4,

Fig. 6 einen Längsschnitt eines anderen Ausführungsbeispiels des Futters,

Fig. 7 eine Vorderansicht des in Fig. 6 dargestellten Futters,

Fig. 8 einen Schnitt nach Linie VIII-VIII in Fig. 6,

Fig. 9 eine weitere Ausführungsform des in Fig. 6-8 dargestellten Futters,

Fig. 10 eine Skizze des Drehmechanismus des Hauptspindels des Futters,

Fig. 11 eine Vorderansicht des in Fig. 10 dargestellten Drehmechanismus,

Fig. 12 ein weiteres Ausführungsbeispiel des Futters im Schnitt,

Fig. 13 den Ring des in Fig. 12 dargestellten Futters, teilweise im Schnitt,

Fig. 14 ein weiteres Ausführungsbeispiel des Futters, im Schnitt,

Fig. 15 ein weiteres Ausführungsbeispiel des Futters, im Schnitt.

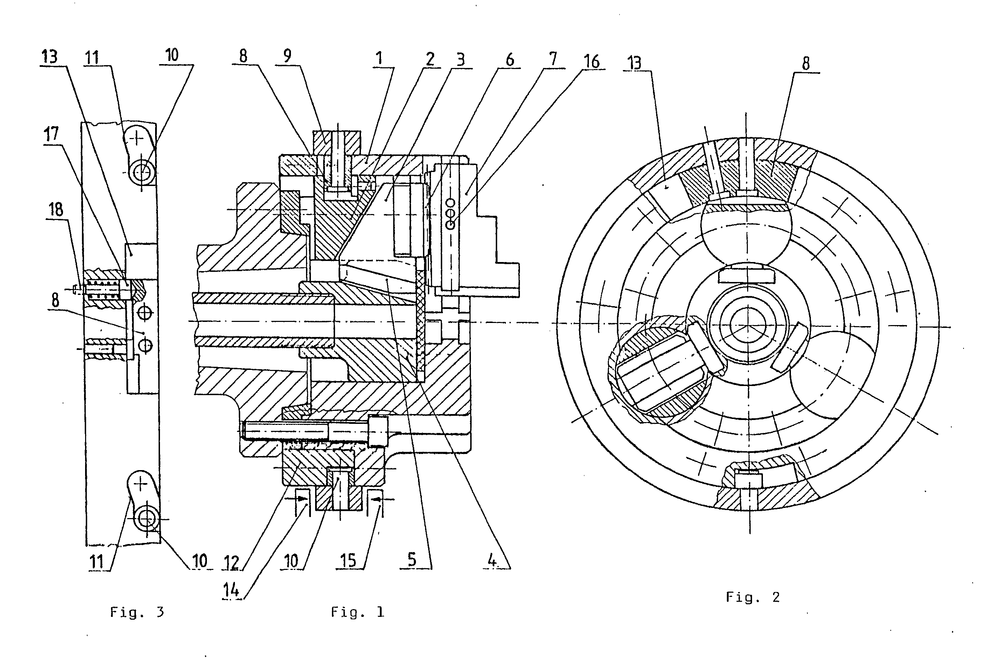

Bei dem in Fig. 1, 2 und 3 dargestellten erfindungsgemässen Futter sind in einem Futterhaus 1 zylindrische Bohrungen ausgebildet, deren Achsen mit der Achse der Hauptspindel parallel sind. In diesen Bohrungen sind Körper 2 axial verschiebbar angeordnet, wobei die inneren Backen 3 in den Körpern 2 radial geführt sind.

Die an den inneren Backen 3 ausgebildeten Keile schliessen sich den auf dem zentralen Ziehkopf 4 ausgebildeten Keilen 5 an. Die Grundbacken schliessen sich durch die Verzahnung der Zahnstange 6 den Backen 7 an, die im Futterhaus 1 geführt sind, und die Werkstücke zusammenklemmen.

Die zylindrischen Körper 2 schliessen sich durch die Zungen 8 dem Ring 9 an, der an der äusseren Oberfläche des Futterhauses 1 geführt ist.

Bei der in Fig. 1, 2, 3 dargestellten Ausführung ist der Ring 9 axial und verdrehbar auf dem Futterhaus 1 geführt. Die drehbare Führung ist durch die zylindrische Oberfläche des Ringes 9 und des Futterhauses 1 gesichert, wobei die axiale Führung durch die in dem Ring 9 befestigten Rollenzapfen 10 und Steuerfläche 11 bestimmt wird. Aus Fertigungsgründen ist das Futterhaus 1 aus zwei Teilen zusammengeschraubt. An dem hinteren kleineren, ringförmigen Teil 12 des Futterhauses sind die Steuerflächen 11 und Durchbrechungen 13 ausgebildet. Durch diese Letzteren ragen die an dem Ring 9 befestigten Zungen 8 in die zylindrischen Körper 2 hinein.

Die Zungen 8 und die zylindrischen Körper 2 schliessen sich den Oberflächenteilen, Ebenen an, die auf die Drehachse des Futters senkrecht sind. Falls sich der Ring 9 um einen durch die Steuerflächen 11 geführten Winkel im Verhältnis zu dem Futterhaus 1 verdreht, verschiebt er sich während des Verdrehens auch in axialer Richtung, und im Laufe dieser Verschiebung verschiebt er durch die Zungen 8 axial die zylindrischen Körper 2. Die Verzahnung der Zahnstange 6 der in den zylindrischen Körpern 2 geführten inneren Backen 6 kann dadurch mit der Verzahnung der Zahnstange der äusseren Backen 7 zusammengekuppelt oder auseinandergekuppelt werden. Die Verdrehung des Ringes im Verhältnis zu dem Futterhaus 1 wird dadurch verwirklicht, dass der Ring 9 mit Hilfe der Backen 14, 15 abgebremst und die Hauptspindel um einen gegebenen Winkel verdreht wird. Zu diesem Verdrehen kann auch der Antrieb C der Hauptspindel angewendet werden bzw. - falls die Hauptspindel keinen Antrieb aufweist - kann der Verdrehungsmechanismus an dem hinteren Teil der Hauptspindel angebaut werden, was vorteilhafter ist als das Einbauen in dem Arbeitsraum.

Das Umstellen der im Futterhaus 1 geführten äusseren Backen 7 auf andere Durchmesserbereiche wird bei allen drei Backen gleichzeitig durch Versetzen verwirklicht. Dadurch werden die Backen auf grösseren oder auf kleineren Durchmesser gestellt. Beide Arten des Versetzens werden aus der Kombination von zwei unabhängigen Bewegungen zustandegebracht. Diese zwei unabhängigen Bewegungen sind die folgenden: Die axiale Bewegung des zentralen Ziehkopfes 4 bzw. die axiale Bewegung der zylindrischen Körper 2, was durch das Abbremsen des Ringes 9 und die Verdrehung der Hauptspindel um einen gegebenen Winkel verwirklicht wird.

Die Schritte zum Versetzen der Backen auf einen kleineren Durchmesser sind die folgenden:

I. Der zentrale Ziehkopf 4 zieht nach hinten, d.h. die inneren Backen 3 befinden sich auf einem kleinen Durchmesser. Das kann als Ausgangsstellung betrachtet werden, der Zyklus beginnt hier und kann wiederholt werden.

II. Die zylindrischen Körper 2 ziehen nach hinten, d.h. die Zahnstange 6 kuppelt sich zwischen den Backen 3 und 7 ab.

III. Der zentrale Ziehkopf 4 schiebt nach vorne, d.h. er schiebt alle drei inneren Backen 3 auf einen grösseren Durchmesser.

IV. Die zylindrischen Körper 2 schieben nach vorne, d.h. die Verzahnungen der Backen 3 und 7 werden auf diesem grösseren Durchmesser zusammengekuppelt.

V. Der zentrale Ziehkopf 4 zieht nach hinten, d.h. er zieht die äusseren Backen 7 durch die inneren Backen 3 um eine Zahnteilung nach innen.

Danach kann dieser Zyklus in beliebiger Zahl wiederholt werden. Zur richtigen Betätigung muss dafür gesorgt werden, dass sich die Backen 7 bei dem auseinandergekuppelten Zustand der Zahnstange 6 nicht verschieben. Das kann mit Hilfe eines, in die in die Seite der Backe 7 gebohrten kleinen Bohrungen 16 (s. Fig. 8) eingesetzten Kompasselementes gesichert werden, aber zu diesem Zweck kann auch die Verzahnung der Backe 7 und der Zahnstange 6 angewendet werden, falls diese etwas breiter ist als die Verzahnung der Zahnstange der Backen 3.

Eine andere Bedingung des richtigen Versetzens ist, dass die inneren Backen 3 im Laufe des dritten Schrittes des Zyklus gerade um eine Zahnteilung auf einen grösseren Durchmesser schreiten sollen. Das kann mit der Begrenzung des Hubes des den zentralen Ziehkopf 4 bewegenden Kolbens erreicht werden. Diese Begrenzung kann in dem Raum hinter der Hauptspindel mit den bei der Programmsteuerung mit Puffern angewendeten Lösungen verwirklicht werden, wo der Puffer nicht nur mechanisch, sondern auch induktiv (oder irgendeiner Fühler) sein kann und diese Bewegung abstellt.

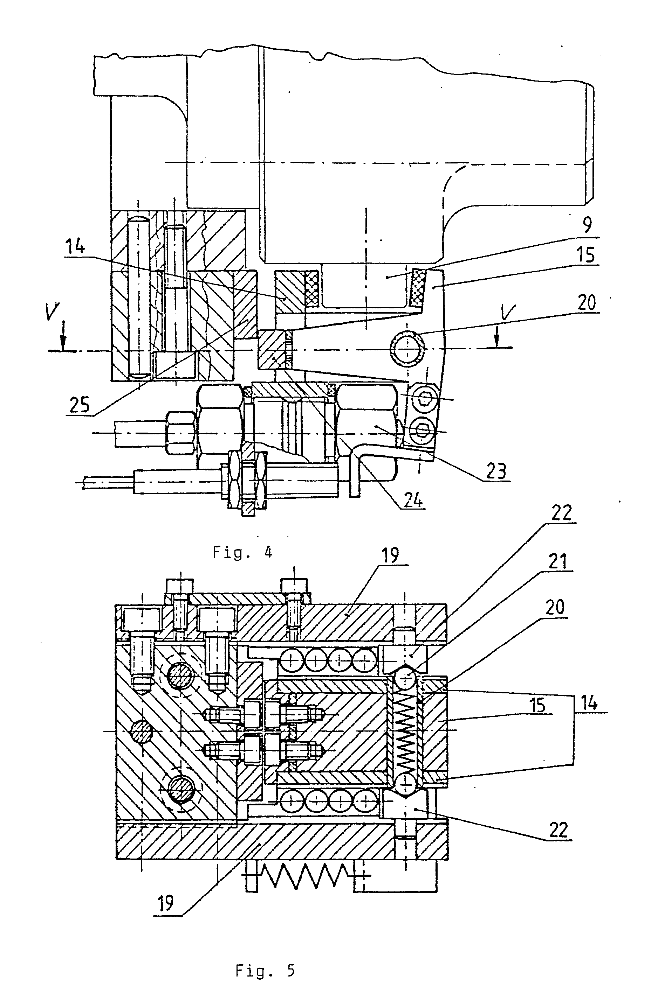

Das Versetzen der Backen nach aussen kann mit der Steuerung der vorherigen Zyklen in verschiedener Reihenfolge verwirklicht werden. Die richtige Reihenfolge ist die folgende: III, II, I, IV, III, wo III die Ausgangsstellung ist und II, I, IV den in beliebiger Zahl wiederholbaren Zyklus darstellen. In dem Normalbetrieb des Futters wird die unerwünschte Auseinanderkupplung der Verzahnung der Zahnstange 6 bzw. die unerwünschte Verdrehung des Futters mit Hilfe eines mehrstufigen Sicherungssystems verhindert. Dieses System besteht aus den folgenden Teilen: wie aus Fig. 3 ersichtlich, wird die Grundlage des Futterhauses 1 und des Ringes 9 durch einen Kegelstift 17 gesichert, der in dem Ring 12 geführt ist und dessen kegeliges Ende sich in die kegelige Bohrung der Zunge 8 einfügt. Falls sich die Zunge 8 aus der Grundlage bewegt, tritt das Ende 18 des mit einer Feder gespannten Kegelstiftes 17 aus dem Ring 12 hinaus. Der hinter dem Ring 12 angeordnete Fühler stellt das Drehen des Futters ab. Die weiteren Sicherungselemente befinden sich in der die den Ring 9 befestigenden Backen 14 und 15 betätigenden Vorrichtung, die in Fig. 4 und 5 dargestellt ist.

Der schlittenartige Körperteil der Backen 14 ist in den an dem Futterhaus 1 befestigten Haltern 19 linear geführt. Der Arm der Backe 15 ist in der Backe 14 um eine aus einem Rohr ausgebildete Welle 20 gelagert. Innerhalb der Welle 20 sind mit einer Feder gespannte Kugeln 21 angeordnet, die mit Hilfe der Kegelstifte 22 in lockerem Zustand die axiale Lage der Backe 14 bestimmen. In diesem Fall befinden sich zwischen dem Ring 9 und den Backen 14, 15 eingestellte Luftspalten, die durch einen, in der Backe 14 befestigten hydraulischen Zylinder bei Befestigung abgeschafft werden, wobei sich die Backe 14 axial verschiebt und die Backe 15 um die Welle 20 verdreht. Bei dieser Verdrehung verdreht sich auch der an den Arm der Backe 15 befestigte Puffer 24. Das Gegenpaar des Puffers 24 ist ein am Futterhaus 1 befestigter Puffer 25, der in dem lockeren Zustand der Backen 14, 15 die axiale Verschiebung der Backe 14 bzw. des Schlittens, und dadurch auch die axiale Bewegung des Ringes 9 hindert. Das bedeutet eine mechanische Verriegelung und ein Sicherheitsplus dafür, dass sich die Verzahnung 6 in dem Futter auch bei einer Betriebsstörung nicht auseinanderkuppeln kann. Dabei wird die Betriebssicherheit auch durch an zwei Stellen vorhandene Fühler und eine elektrische Verriegelung bewahrt, damit beim Auseinanderkuppeln der Verzahnungen 6 die Drehung des Hauptspindels verhindert sein soll. Der eine Fühler fühlt die Verschiebung des Endes 18 des Kegelstiftes 17 und der andere die axiale Verschiebung des Ringes 9 durch die Kontrollierung der Lage des Schlittens bzw. der Backe 14. Beim Pressen der Backen 14, 15 kippt der Puffer 24 unter den Puffer 25 und erlaubt die Bewegung der Backe 14 mit dem Ring 9 zusammen, nach hinten, wodurch sich die axiale Verriegelung der Backe 14 auflöst und diese sich mit dem Ring 9 zusammen nach hinten bewegt.

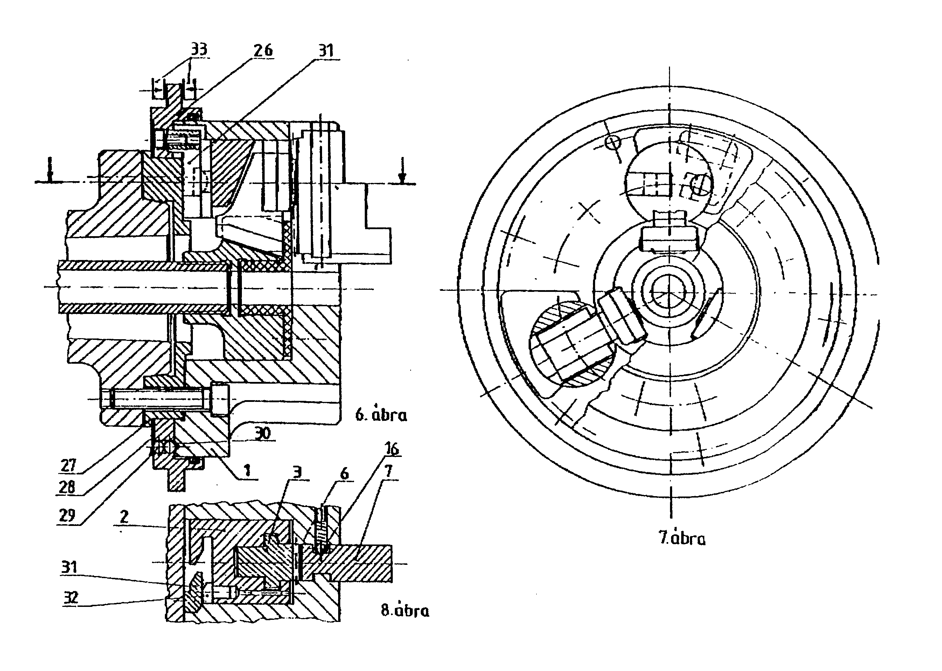

Fig. 6 -8 stellen eine Ausführungsform des Aufspannfutters dar, bei welcher der an den äusseren Oberflächen und an den Randteilen des Futterhauses geführte Ring 26 nur eine verdrehbare Führung bekommt, wobei ihre axiale Bewegung durch die Aufspannscheibe 27 und die Randteile des Futterhauses 1 gehindert wird.

Dieselben Randteile halten die Federplatte 28, die die Kugeln 29 in ein in dem Futterhaus 1 ausgebildetes kegeliges Nest 30 presst und dadurch die Grundlage des Futterhauses 1 und des Ringes 26 verriegelt. An dem Ring 26 sind Steuerzungen 31 befestigt, die durch die Stossblöcke 32 die axiale Lage der zylindrischen Körper 2 in dem Futterhaus 1 bestimmen. Die axialen Lagen der Körper 2 bestimmen die Kupplung der Verzahnungen 6 zwischen den inneren Backen 3 und äusseren Backen 7. Die Verzahnungen 6 werden derart auseinandergekuppelt, dass sich die an dem Ring 26 befestigten Steuerzungen 31 im Verhältnis zu dem Futterhaus 1 verdrehen und die keilförmigen Oberflächenteile der Steuerzungen 31, die sich mit den keilförmigen Oberflächenteilen der Körper 2 zusammenkuppeln, während des Verdrehens die Körper 2 bzw. die in diesen geführten inneren Backen 3 nach hinten ziehen. Das Verdrehen des Ringes 26 im Verhältnis zu dem Futterhaus 1 kann zweckmässig so verwirklicht werden, dass in dem Arbeitsraum nur die für Befestigung der Ringe 26 durch das Pressen der Backen 33 gesorgt wird, wobei das Drehen durch die Hauptspindel verwirklicht wird, und zwar entweder durch den Antrieb C oder mit Hilfe einer, in dem hinter der Hauptspindel vorhandenen Raum angebrachten Dreheinheit.

Eine Variante der Befestigung des Ringes 26 ist in Fig. 6 dargestellt, wo die Randteile des Ringes 26 durch sich axial verschiebende Backen 33 verwirklicht werden.

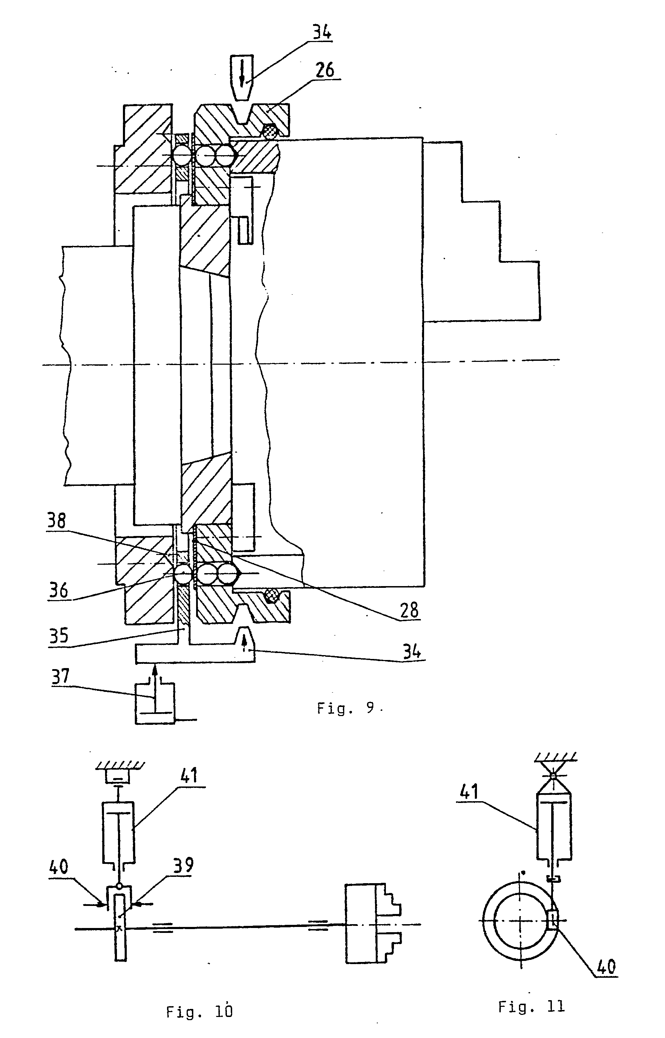

In Fig. 9 ist eine andere Variante der Befestigung des Ringes 26 dargestellt, wo in den äusseren V-förmigen Randteil des Ringes 26 eine Schelle 34 eingepresst ist, wodurch eine Befestigung senkrecht auf die Drehachse verwirklicht wird. In Fig. 9 ist ausserdem eine mechanische Sicherungsverriegelung zur Verringerung der unerwünschten Kupplung der Verzahnung 6 dargestellt. Hinter der Feder 28 sind in dem Ring 35 Kugeln 36 geführt, die die unerwünschte Biegung der Feder 28 nach hinten verhindern. Die auf die Drehachse senkrechte Bewegung der Schelle 34 ist mit der in der selben Richtung erfolgenden Bewegung des die Kugeln 36 haltenden Ringes 35 verbunden. Falls sich der Ring 35 auf Wirkung der Hydraulik 37 auf die Drehachse senkrecht linear bewegt, gelangen die Kugeln 36 im Laufe dieser Bewegung an eine Stelle, wo in der hinteren Stützfläche kegelige Bohrungen 38 ausgebildet sind. In dieser Lage hindern die Kugeln 36 die Biegung der Federplatte nach hinten nicht.

Bei diesem Typ des Futters kann die automatische Umstellung der Backen mit denselben Schritten verwirklicht werden, wie das bei den in Fig. 1-3 dargestellten Ausführungen beschrieben wurde, bloss der Machanismus zum Nach-hinten-Ziehen der Körper 2 ist verändert. Im Laufe des Nach-hinten-Ziehens ist auch die Art der Verwirklichung identisch: bei sämtlichen bisher beschriebenen Systemen wird der an den äusseren Oberflächenteilen des Futterhauses 1 geführte Ring 9 bzw. 26 fixiert und danach werden durch die Verdrehung der Hauptspindel die zylindrischen Körper 2 nach hinten gezogen.

Eine Variante zum Verdrehen der Hauptspindel ist in Fig. 10 und Fig. 11 dargestellt. In dem Raum hinter der Hauptspindel ist ein Ring 39 an der Hauptspindel befestigt. Die Oberflächenteile des Ringes 39 werden durch automatisch betätigte Backen mit dem Ziehkopf des Zylinders 41 verbunden. Nach Fixieren kann das Verdrehen mit Hilfe des hydraulisch oder pneumatisch betätigten Zylinders 41 einfach verwirklicht werden. Der Ring 39 und die Backen 40 können natürlich nicht nur durch die Befestigung der Stirnflächen axial befestigt werden, sondern es können auch hier z.B. Schellen verwendet werden, wie das in Fig. 9 bei der Befestigung des an dem Futter geführten Ringes dargestellt ist.

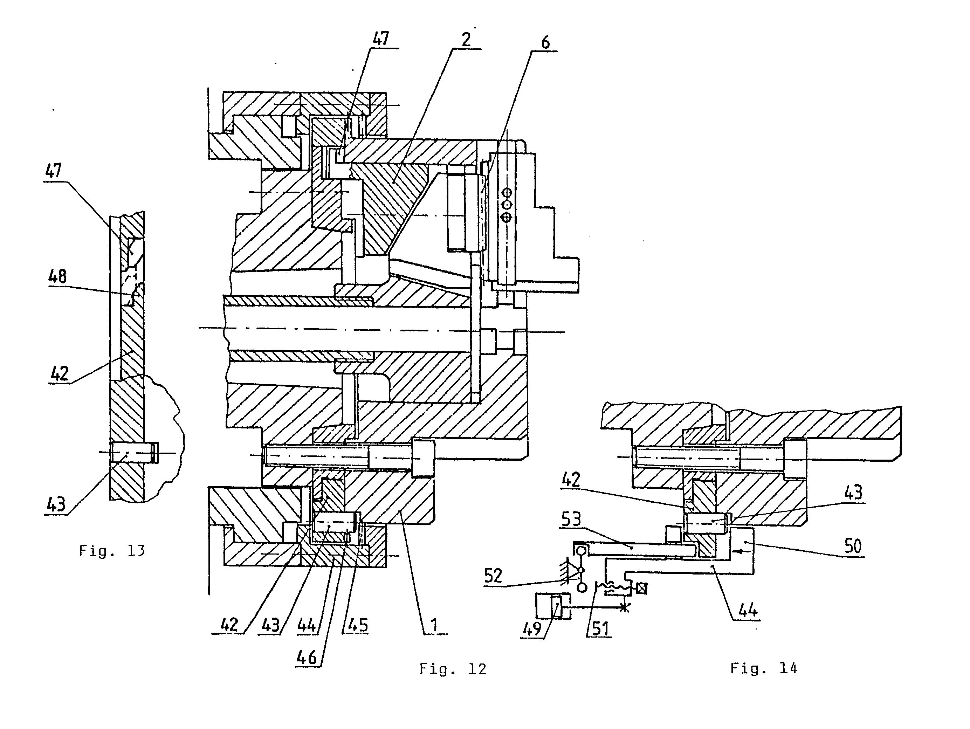

In Fig.12 ist das Futterhaus 1 bzw. der an den äusseren Oberflächenteilen der Aufspannscheibe geführte Ring 42 verdrehbar geführt. Das Verdrehen wird bei normalem Betrieb des Aufspannfutters mit dem Bolzen 43 verringert, der in dem Ring 42 geführt wird und dessen rechtseitiges Ende in der dargestellten Lage in die Bohrung des Futterhauses 1 hineinragt. Das Entriegeln kommt beim Verschieben des Ringes 44 nach links zustande. Der Ring 44 ist an den stehenden Oberflächenteilen der Werkzeugmaschine axial geführt und kann sich nicht verdrehen. Beim Verschieben nach links verschiebt die dem Ring 44 angeschlossene Verzahnung 45 der Scheibe den Bolzen 43 nach links und verhindert danach, mit der Verzahnung 46 des Ringes 26 kuppelnd, das Drehen desselben. Noch früher wurde die Hauptspindel durch die an dem hinteren Teil der Hauptspindel angebrachten Backen 40 (s. Fig. 10 und 11) bzw. Schellen angegriffen, so ist die Kupplung der Verzahnung 45, 46 der Backen in stehender Lage des Futters möglich. Danach verdreht sich die Hauptspindel um einen gegebenen Winkel, z.B. mit Hilfe der in Fig. 10 und 11 dargestellten Vorrichtung. Nach Verdrehen der Hauptspindel übt der in seinem Verdrehen verhinderte Ring 42 eine relative Bewegung im Verhältnis zum Futterhaus 1 bzw. zu den in diesem axial geführten Körpern 2, die die inneren Backen 3 führen, aus. Durch die Keilflächen der aus dem Körper 2 ausgebildeten Zunge 47 zieht die Keilfläche 48 des Ringes 42 die Körper 2 in axialer Richtung nach hinten, wodurch die Verbindung zwischen den Verzahnungen aufhört. Die relative Lage der Elemente 42, 47, 48 ist auch in Fig. 13 dargestellt.

Der Zyklus der Umstellung der Backen ist mit den in Fig. 1 - 3 dargestellten Zyklen vollkommen identisch.

Fig. 14 stellt eine weitere Variante des Aufspannfutters dar. Der Unterschied zu der in Fig. 12, 13 dargestellten Lösung besteht darin, dass die Verzahnungen 45, 46 wegbleiben und beim Umstellen der Backen der Ring 42 an dem in seiner Verdrehung verhinderten Ring 44 durch Reibverbindung befestigt wird.

Im Laufe der Reibverbindung werden die Randflächen von grösstem Durchmesser des Ringes 42 durch zwei Backen gepresst, von denen die eine die Stirnfläche des an dem Ring 44 befestigten Ringes 50 und die andere ein eine Bewegung in der entgegengesetzter Richung ausübender Bremsblock 53 ist. Die Bewegung in entgegengesetzter Richtung kann auf mehrfache Weise erreicht werden: z.B. mit einem Keil entgegengesetzter Richtung, mit einem zweiarmigen Hebel, usw.

In Fig. 14 ist ein Beispiel für einen zweiarmigen Hebel dargestellt. Die Entriegelung und Befestigung des Ringes 42 ist mit Hilfe eines hydraulischen Zylinders 49 dadurch durchgeführt, dass bei der Verschiebung nach links die Stirnfläche des Ringes 50, der an den Ring 44 befestigt ist, den Bolzen 43 nach links verschiebt, so dass dessen Ende aus der Bohrung des Futterhauses 1 hinausläuft. Inzwischen erreicht der Anschlag 51 den einen Arm des zweiarmigen Hebels 52, wobei der andere Arm des Hebels 52 den Bremsblock 53 nach rechts bewegt. Der Ring 50 und der Bremsblock 53 befestigen den Ring 42 im Laufe ihrer Bewegung zueinander. Danach kommt die Verdrehung der Hauptspindel und die Entkupplung der Verzahnung 6 ebenso zustande, wie das im Zusammenhang mit den Figuren 10 - 13 beschrieben wurde. Das Umstellen der Backen wird auf dieselbe Weise verwirklicht, wie bei den in Fig. 1 - 3 beschriebenen Zyklen.

Die Aufspannfutter können nicht nur auf eine Hauptspindel montiert angewendet werden, sondern auch bei Dosierroboten. In diesem Fall sind die Ansprüche betreffend Steifheit und Genauigkeit geringer, doch die automatische Umstellung des Einspannungsgebietes ist auch hier wichtig. In solchen Fällen können die Bewegungen der Umstellung der Backen vereinfacht werden.

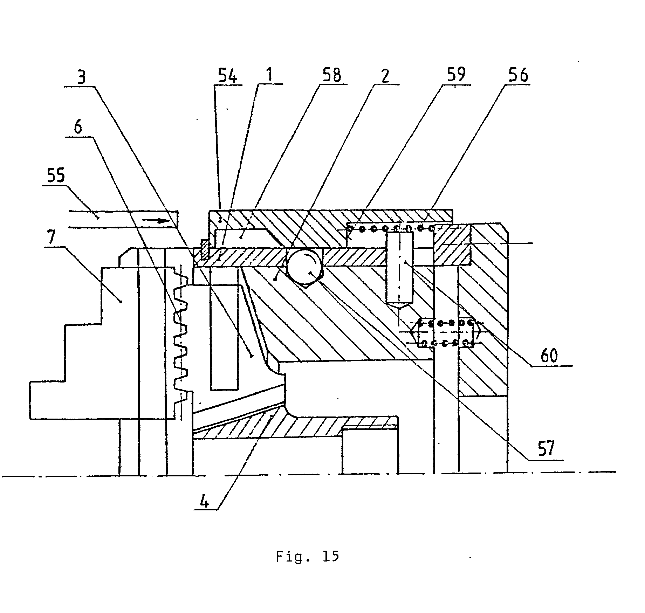

Fig. 15 zeigt eine nach diesen Standpunkten ausgearbeitete Variante. Der die inneren Backen 3 radial führende Körper 2 ist ringförmig und sein äusserer Mantel ist in einer Bohrung des Futterhauses 1 geführt. Der zentrale Ziehkopf 4 ist in der Bohrung des Körpers 2 geführt. Der an den äusseren zylindrischen Oberflächen des Futterhauses 1 geführte Ring 54 bekommt dadurch eine axiale Führung. Die Entkupplung der Verzahnung 6 zwischen den inneren Backen 3 und den äusseren Backen 7 kann durch Verschieben des Ringes 54 nach hinten verwirklicht werden. Diese Verschiebung nach hinten kann durch Betätigung des Grundmechanismus des Robotes dadurch verwirklicht werden, dass z.B. der Ring 54 bzw. das Futter auf die starren, von dem Robot unabhängigen Anschläge 55 aufgeschoben wird. Beim Schieben des Ringes 54 nach hinten spielen sich die folgenden Vorgänge ab: gegen das Zusammenpressen der Feder 56 schiebt sich der Ring 54 auf dem Futterhaus 1 nach hinten, die Kugeln 57 können sich in der Nut 58 radial verschieben, wodurch die axiale Befestigung und Riegelung des Körpers 2 aufhört, danach erreicht die Stirnfläche 59 des Ringes 54 den in dem Körper 2 befestigten Bolzen 60 und zieht den Körper 2 bzw. die inneren Backen 3 mit sich.

Die Zyklen des Versetzens der Backen auf verschiedene Durchmesser sind auch hier mit den Zyklen der in Figuren 1 - 3 dargestellten Ausführungen identisch. Die Vereinfachung bedeutet, dass zu den Zyklen die an dem Robot bzw. an dem Futter bereits vorhandenen Bewegungen benutzt werden, u.zw. die axiale Bewegung des Robots bzw. die axiale Bewegung des Ziehkopfes des Futters.

Der Vorteil des erfindungsgemässen Futters besteht darin, dass bei automatischen Futtern von grosser Presskraft die Umstellungen des Durchmessergebietes ohne menschlichen Eingriff verwirklicht werden, ausserdem solche konstruktionelle Lösungen angewendet werden, bei welchen die Keilflächen der inneren Backen erhöht werden können, wodurch sich die Tragfähigkeit des Futters erhöht.

Ein weiterer Vorteil der erfindungsgemässen Lösung im Vergleich mit den Systemen mit Backenaustausch besteht darin, dass zum Umstellen des Durchmesserbereiches keine platzaufwändigen Futterbackenmagazine notwendig sind und zum Umstellen der Backen kein Robot angewendet werden muss. Dies wirkt sich auch auf die Ausbildung von flexibilen Fertigungssystemen vorteilhaft aus.

Ein weiterer Vorteil der erfindungsgemässen Lösung besteht darin, dass die Hauptspindel bei beliebiger Winkelstellung betätigt werden kann, d.h. die Spindel nicht in eine genaue Lage gedreht werden muss, sondern die Bremsbacken in ihrer beliebigen Stellung die an der äusseren Oberfläche des Futters geführten Ringe fixieren können. Diese vorteilhafte Eigenschaft ermöglicht die Anwendung der erfindungsgemässen Futter an den NC Maschinen, die zur genauen Positionierung der Hauptspindel keinen C-Antrieb aufweisen.

Ein weiterer Vorteil besteht darin, dass zum Umstellen der Futterbacken auch die Bewegung des zentralen Ziehkopfes, weiterhin - falls vorhanden - der C-Wellenantrieb der Hauptspindel angewendet werden. Falls die Hauptspindel keinen C-Wellenantrieb aufweist, können die zur Verdrehung der Hauptspindel notwendigen Hilfsvorrichtungen in dem hinter der Hauptspindel vorhandenen Raum eingebaut werden. Durch Verdopplung dieser Hilfsvorrichtung können durch Drehen der Hauptspindel Positionierungsaufgaben auch unabhängig von der Funktion des Futters gelöst werden.

Ein weiterer Vorteil der erfindungsgemässen Lösung bei der Anwendung von Robotern ist, dass sämtliche Bewegungen des Robots, d.h. seine Linearen oder Drehbewegungen beim Umstellen der Backen angewendet werden können.

Ein weiterer Vorteil besteht darin, dass die erfindungsgemässe Lösung mit Auswechselsystemen verbindbar ist. In diesen kombinierten Systemen können die Magazine von kleinerer Kapazität sein und es können einfachere Manipulatoren angewendet werden.

**Patentansprüche**

1. Aufspannfutter mit Ziehkeilen zum Aufspannen von zylindrischen Werkstücken mit Hilfe von in eine Zahnstange (6) eingreifenden äusseren Backen (7) und inneren Backen (3), wobei die inneren Backen (3) durch Keilbahnen an die Keilbahnen des zentralen Ziehkopfes (4) des Futters anschliessen und der zentrale Ziehkopf (4) eine zur Ausübung einer für axiale Bewegung geeignete, hydraulisch, pneumatisch oder elektromechanisch betätigte Vorrichtung aufweist, dadurch **gekennzeichnet,** dass die inneren Backen (3) in den im Futterhaus (1) axial geführten Körpern (2) radial geführt sind und die Körper (2) sich durch Zungen (8, 31, 47) oder durch Bolzen (10, 55) dem Ring (9, 26, 42, 54) anschliessen, an den äusseren Oberflächenteilen des Futterhauses (1) bzw. der mit ihnen starr zusammengeschraubten Ringen (12) bzw. Aufspannscheiben geführt ist, weiterhin eine die relative Lage des äusseren Ringes und des Futterhauses (1) verriegelnde Vorrichtung (17, 24, 25, 30, 36, 46) aufweist und zwischen dem äusseren Ring (9, 26, 42) und den zum Maschinenkörper gebundenen Konstruktionselementen eine in beliebiger Stelle des Futters fixierbare und die Verdrehung hindernde Vorrichtung (14, 15, 33, 34, 45, 50), weiterhin eine zum diskreten Verdrehen oder zur axialen Verschiebung der Aufspanneinheit geeignete Vorrichtung (40, 41) aufweist.

2. Aufspannfutter nach Anspruch 1, dadurch **gekennzeichnet,** dass die die inneren Backen (3) führenden, in den mit der Achse des Futters parallelen axialen Bohrungen geführten Körper (2) zylindrische Leitflächenteile aufweisen.

3. Aufspannfutter nach Anspruch 1, dadurch **gekennzeichnet,** dass sich die axiale Abmessung der inneren Backen (3) in Richtung der grösseren Durchmesser verringert.

4. Aufspannfutter nach einem der Ansprüche 1 bis 3, dadurch **gekennzeichnet,** dass die die inneren Backen führenden zylindrischen Körper (2) durch auf die Achse des Futters senkrechte Flächenteile mit den in das Futterhaus einragenden, an dem äusseren Ring (9) befestigten Zungen (8) verbunden sind.

5. Aufspannfutter nach einem der Ansprüche 1 bis 4, dadurch **gekennzeichnet,** dass das Futterhaus aus zwei Teilen zusammengeschraubt ist, und in dem hinteren kleineren ringförmigen Teil des Futterhauses (1) in dem an das Futterhaus (1) geführten ausseren Ring (9) Zungen (8) und Rollenzapfen (10) befestigt sind, wobei die Rollen der Zapfen an die in dem Futterhaus bzw. in dem mit diesem zusammengebauten Ring (12) ausgebildeten Leitflächen anschliessen.

6. Aufspannfutter nach Ansprüchen 1 und 5, dadurch **gekennzeichnet,** dass zwischen dem an dem Futterhaus (1) geführten äusseren Ring (9) und den zu dem Werkzeugkörper Gebundenen Konstruktionselementen eine mit der Achse der Hauptspindel parallele Führung der in jeder beliebigen Lage des Futters fixierbaren und die lösbare Verdrehung hindernden, mit Reibungsbacken versehenen Vorrichtung (14) vorhanden ist.

7. Aufspannfutter nach einem der Ansprüche 1 bis 6, dadurch **gekennzeichnet,** dass er eine in entkoppelter Lage der mit Reibungsbacken versehenen Vorrichtung den axialen Rücklauf hindernde mechanische Rieglungsvorrichtung bzw. Puffer (24, 25) aufweist.

8. Aufspannfutter nach einem der Ansprüche 1 bis 7, dadurch **gekennzeichnet,** dass zwischen dem in dem Futterhaus (1) befestigten Ring (12) und der in das Futterhaus hineinragenden Zunge (8) ein Kegelstift (17) angeordnet ist und zum Positionkontrollieren des Endes (18) des Kegelstiftes (17) ein Fühlungsorgan (Sensor) an dem Werkzeugmaschinenkörper befestigt ist.

9. Aufspannfutter nach einem der Ansprüche 1 bis 8, dadurch **gekennzeichnet,** dass der zum diskreten Verdrehen der Aufspanneinheit - Hauptspindel- geeignete Konstruktionsteil mit dem C-Wellenantrieb der Hauptspindel identisch ist.

10. Aufspannfutter nach einem der Ansprüche 1 bis 8, dadurch **gegekennzeichnet,** dass der zum diskreten Verdrehen der Hauptspindel geeignete Konstruktionsteil ein pneumatisch oder hydraulisch betätigter Zylinder (41) ist, dessen gelenkiger Kolben mit einer hydraulisch, pneumatisch oder elektromagnetisch betätigten Befestigungsvorrichtung (40) an die Oberflächenteile einer an das Ende der Hauptspindel befestigten Scheibe anschliesst.

11. Aufspannfutter nach einem der Ansprüche 1, 2, 3, 9, 10, dadurch **gekennzeichnet,** dass die die inneren Backen führenden zylindrischen Körper (2) durch keilförmige mit Gewinde versehene Oberflächenteile mit den in das Futterhaus (1) einragenden Zungen (31) verbunden sind, die an einem in dem Futterhaus geführten Ring (26) befestigt sind.

12. Aufspannfutter nach einem der Ansprüche 1, 2, 3, 10, 11, dadurch **gekennzeichnet,** dass in dem Randteil des an dem Futterhaus geführten Ringes (26) axiale, durchgehende Bohrungen vorhanden sind, in die Bohrungen Kugel (29) angeordnet sind, die auf einer Seite mit einer hinter dem Futter angebrachten Federplatte, auf der anderen Seite mit in dem Futterhaus (1) ausgebildeten kegeligen Bohrungen verbunden sind, weiterhin, dass er hinter der Federplatte einen auf die fixen Teile der Werkzeugmaschine montierten, verschiebungsfühlenden Sensor und eine Verriegelungsvorrichtung (36, 38) aufweist.

13. Aufspannfutter nach einem der Ansprüche 1, 2, 3, 9, 10, 11, dadurch **gekennzeichnet,** dass in den axialen Bohrungen des an den ausseren Oberflächenteilen des Futterhauses (1) bzw. der Aufspannscheibe verdrehbar geführten Ringes (42) Verriegelungsbolzen (43) vorhanden sind, von denen das eine Ende in die Bohrungen des Futterhauses (1) einragt und die Stirnflächen der Bolzen an einen in ihrer Drehung gehinderten, axial geführten Ring (44) anschliessen.

14. Aufspannfutter nach einem der Ansprüche 1, 2, 3, 9, 10, 11, 13, dadurch **gekennzeichnet,** dass der an den äusseren Oberflächenteilen der Aufspannscheibe geführte Ring (42) mit Verzahnung (46) versehen ist, die in die Verzahnung (45) des in ihrer Drehung gehinderten, axial geführten Ringes bei der Umstellung der Backen eingreift.

15. Aufspannfutter nach einem der Ansprüche 1, 2, 3, 9, 10, 11, 13 dadurch **gekennzeichnet,** dass die Stirnflächen der Bolzen (43) des an den äusseren Oberflächenteilen der Aufspannscheibe geführten Ringes (42) an den in ihrer Drehung gehinderten, axial geführten Ring (44) anschliessen und der Ring (42) einen mit Reibungsbacken versehenen Fixiermechanismus (50, 53) aufweist.

16. Aufspannfutter nach Anspruch 1, dadurch **gekennzeichnet,** dass der an den äusseren Oberflächenteilen des Futterhauses (1) geführte, kegelige, zylindrische Ring (54) axial geführt ist und sich durch Stirnflächen an die Riegelungselemente (57) und axial bewegenden Elemente (60) des die inneren Backen führenden zylindrischen Körpers (2) anschliesst.

Fig. 3

Fig. 1

Fig. 2

EP 0 447 682 A1

Fig. 4

Fig. 5

7.ábra

6. ábra

8.ábra

31

26

33

16

7

6

3

30

1

27

28

29

31

32

2

Fig. 9.

Fig. 10

Fig. 11

Fig. 13

Fig. 12

Fig. 14

EP 0 447 682 A1

13

Fig. 15

| | EINSCHLÄGIGE DOKUMENTE | | EP 90125576.0 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl⁵) |
|---|---|---|---|
| A | EP - A1 - 0 303 002 (RÖHM) * Gesamt * | 1,5 | B 23 B 31/10 |
| A | DE - A1 - 3 434 308 (PAUL FORKARDT GMBH) * Fig. 1 * | 1 | |
| A | DE - C2 - 3 219 295 (AUTOBLOK S.P.A.) * Fig. 1,2 * | 1 | |
| A | DE - A1 - 3 108 745 (PAUL FORKARDT GMBH) * Fig. 1 * | 1 | |
| A | DE - A1 - 3 005 459 (PAUL FORKARDT KG) * Fig. 1 * | 1 | |
| A | EP - A2 - 0 212 198 (PAUL FORKARDT GMBH) * Zusammenfassung; Fig. 2 * | | RECHERCHIERTE SACHGEBIETE (Int. Cl⁵)<br><br>B 23 B 31/00<br>B 23 Q 3/00 |

Der vorliegende Recherchenbericht wurde für alle Patentansprüche erstellt.

| Recherchenort | Abschlußdatum der Recherche | Prüfer |
|---|---|---|
| WIEN | 06-06-1991 | WEISS |